# EUROPEAN PATENT APPLICATION

(11) **EP 4 195 314 A1**
(43) Date of publication of application: **14.06.2023**
(21) Application number: 22816297.0
(22) Date of filing: 19.04.2022
(51) Int. Cl.: H01M 4/131, H01M 4/62, H01M 4/525, H01M 4/505, H01M 4/1391, H01M 10/052, H01M 4/02

(54) **POSITIVE ELECTRODE FOR LITHIUM SECONDARY BATTERY AND LITHIUM SECONDARY BATTERY COMPRISING SAME**

(30) Priority: 03.06.2021 KR 20210072238; 04.04.2022 KR 20220041454
(71) Applicant: LG Energy Solution, Ltd., Seoul 07335 (KR)
(72) Inventor: LEE, Gyeong Seop, Daejeon 34122 (KR); OH, Sang Seung, Daejeon 34122 (KR); KIM, Hye Hyeon, Daejeon 34122 (KR); JO, Chi Ho, Daejeon 34122 (KR); YOO, Tae Gu, Daejeon 34122 (KR)
(74) Representative: Hoffmann Eitle
(86) International application number: PCT/KR2022/005564
(87) International publication number: WO 2022/255636

(57) **Abstract**

The present disclosure relates to a positive electrode for a lithium secondary battery and a lithium secondary battery including the same, wherein the positive electrode is manufactured by using a pre-dispersion containing a positive electrode additive represented by Chemical Formula 1 and a conductive material having a linear structure in a positive electrode mixture layer as an irreversible additive and, by adjusting the electrode sheet resistance to satisfy a specific range, it is possible to reduce the amount of oxygen gas generated during charging and discharging, as well as easily improve the charging and discharging efficiency of the lithium secondary battery.

## Description

### [Technical Field]

The present disclosure relates to a positive electrode for a lithium secondary battery and a lithium secondary battery including the same. The present application claims the benefit of priority based on Korean Patent Application No. 10-2021-0072238 dated June 03, 2021 and Korean Patent Application No. 10-2022-0041454 dated April 04, 2022, and all contents published in the literature of the Korean patent applications are incorporated as part of this specification.

### [Background Art]

In recent years, the demand for secondary batteries as an energy source is rapidly increasing. Among these secondary batteries, a lithium secondary battery having high energy density and voltage, a long cycle life, and a low self-discharge rate has been commercialized and widely used.

Although graphite is mainly used as a negative electrode material of a lithium secondary battery, since graphite has a small capacity per unit mass of 372 mAh/g, it is difficult to increase the capacity of a lithium secondary battery. Accordingly, in order to increase the capacity of a lithium secondary battery, as a non-carbon-based negative electrode material having a higher energy density than graphite, a negative electrode material that forms an intermetallic compound with lithium, such as silicon, tin, and oxides thereof, has been developed and used. However, in the case of such a non-carbon-based negative electrode material, although the capacity is large, the initial efficiency is low, there is a problem that the lithium consumption during the initial charging/discharging is large, and the irreversible capacity loss is large.

In this regard, there has been proposed a method for overcoming the irreversible capacity loss of the negative electrode by using a material that can provide a lithium ion source or reservoir to the positive electrode material and that is electrochemically active after an initial cycle so as not to degrade the overall performance of the battery. Specifically, as a sacrificial positive electrode material or an irreversible additive (or an overdischarging inhibitor), for example, a method of applying an oxide including an excess of lithium, such as Li₆CoO₄, to the positive electrode is known.

Meanwhile, a conventional irreversible additive such as Li₆CoO₄ is generally prepared by reacting cobalt oxide, etc. with an excess of lithium oxide. The irreversible additive prepared in this way is structurally unstable and generates a large amount of oxygen gas (O₂) as follows as charging proceeds, and when the irreversible additive remains without reacting during the initial charging of the secondary battery, i.e., during the activation of the battery, a reaction may occur in the subsequent charging and discharging process to generate a side reaction or a large amount of an oxygen gas inside the battery. Oxygen gas thus generated may cause volume expansion and the like of an electrode assembly, and may be one of the main factors leading to deterioration of battery performance.

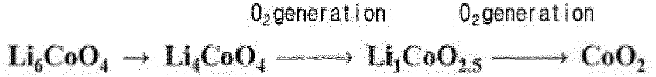

In addition, the conventionally used irreversible additive exhibits a very low powder electrical conductivity of 10⁻¹¹ S/cm, which is close to an insulator, due to a 2D percolating network. This low powder electrical conductivity increases the electrical resistance of the positive electrode, and in this case, a large capacity of 200 mAh/g or more is exhibited at a low C-rate, but when the C-rate increases, due to the large resistance as charging/discharging progresses, performance rapidly decreases, so that the charging/discharging capacity of the battery decreases, and there is a limitation in that high-speed charging and discharging is difficult.

Accordingly, there is a demand for the development of a lithium secondary battery having excellent electrical performance as well as improved lithium secondary battery safety.

### [Related Art Document]

Korea Patent Publication No. 10-2019-0064423

### [Disclosure]

### [Technical Problem]

Accordingly, an object of the present invention is to provide a positive electrode for a lithium secondary battery with improved safety while effectively improving electrical properties of the lithium secondary battery, and a lithium secondary battery including the same.

### [Technical Solution]

In order to solve the above-mentioned problem,

In one embodiment, the present disclosure provides a positive electrode for a lithium secondary battery including:
a positive electrode current collector; and
a positive electrode mixture layer disposed on the positive electrode current collector,
wherein the positive electrode mixture layer includes a positive electrode active material, a positive electrode additive represented by the following Chemical Formula 1, a first conductive material, and a binder;
wherein the first conductive material contains one or more of carbon nanotubes, graphite nanofibers, carbon nanofibers, vapor-grown carbon fibers and activated carbon fibers; and
a sheet resistance of the positive electrode is 3.0 Ω/sq. or less:

   [Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

In this case, the positive electrode mixture layer may further include a second conductive material, wherein the second conductive material may contain one or more of natural graphite, artificial graphite, carbon black, acetylene black, Denka black, ketjen black, Super-P, channel black, furnace black, lamp black, and thermal black.

In addition, the electrode sheet resistance (R12) of the positive electrode containing the first conductive material and the second conductive material in the positive electrode mixture layer may have:
a ratio (R12/R1) of 0.5 to 1.2 with respect to the electrode sheet resistance (R1) of the positive electrode containing the first conductive material alone in the positive electrode mixture layer, or
a ratio (R12/R2) of 0.1 to 0.8 with respect to the electrode sheet resistance (R2) of the positive electrode containing the second conductive material alone in the positive electrode mixture layer.

Specifically, the electrode sheet resistance (R12) of the positive electrode containing the first conductive material and the second conductive material in the positive electrode mixture layer may have:
a ratio (R12/R1) of 0.7 to 1.0 with respect to the electrode sheet resistance (R1) of the positive electrode containing the first conductive material alone in the positive electrode mixture layer, or
a ratio (R12/R2) of 0.2 to 0.6 with respect to the electrode sheet resistance (R2) of the positive electrode containing the second conductive material alone in the positive electrode mixture layer.

In addition, the positive electrode additive may have a tetragonal structure with a space group of P4₂/nmc.

In addition, the content of the positive electrode additive may be 0.1 to 10 parts by weight based on 100 parts by weight of the positive electrode mixture layer.

In addition, the content of the first conductive material may be 0.1 to 10 parts by weight based on 100 parts by weight of the positive electrode mixture layer.

In addition, when the first conductive material and the second conductive material are included together, the total content of the first conductive material and the second conductive material may be 0.1 to 10 parts by weight based on 100 parts by weight of the positive electrode mixture layer, and, in this case, the second conductive material may be included in an amount of 20 to 60 parts by weight based on 100 parts by weight of the first conductive material.

Meanwhile, the positive electrode active material may be a lithium metal composite oxide represented by the following Chemical Formula 2:

[Chemical Formula 2] Liₓ[Ni_{y}Co_{z}Mn_{w}M²ᵥ]Oᵤ

wherein,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

Further, in one embodiment, the present disclosure provides a method of manufacturing a positive electrode for a lithium secondary battery, including steps of:
preparing a pre-dispersion by mixing a positive electrode additive represented by the following Chemical Formula 1, a first conductive material, and a binder;
preparing a positive electrode slurry by mixing the prepared pre-dispersion, a positive electrode active material, and a binder; and
preparing a positive electrode mixture layer by applying the positive electrode slurry on a positive electrode current collector;
wherein the first conductive material contains one or more of carbon nanotubes, graphite nanofibers, carbon nanofibers, vapor-grown carbon fibers and activated carbon fibers; and
the manufactured positive electrode has a sheet resistance of 3.0 Ω/sq. or less:

   [Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

In this case, the step of preparing the pre-dispersion may be carried out at a relative humidity condition of 10% or less.

In addition, in the step of preparing a positive electrode slurry, a second conductive material may be further mixed.

In addition, in one embodiment, the present disclosure provides a lithium secondary battery including the positive electrode according to the present technology described above; a negative electrode; and a separator positioned between the positive electrode and the negative electrode.

### [Advantageous Effects]

The positive electrode for a lithium secondary battery according to the present technology is manufactured by using a pre-dispersion containing a positive electrode additive represented by Chemical Formula 1 and a conductive material having a linear structure in a positive electrode mixture layer as an irreversible additive and, by adjusting the electrode sheet resistance to satisfy a specific range, it is possible to reduce the amount of oxygen gas generated during charging and discharging, as well as to easily improve the charging and discharging efficiency of the lithium secondary battery.

### [Brief Description of the Drawings]

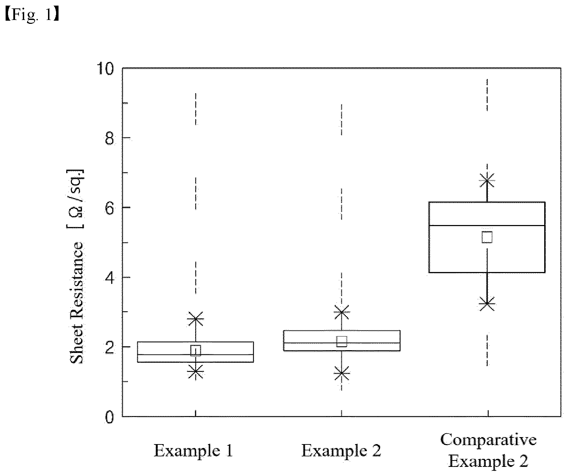

FIG. 1 is a graph showing the sheet resistance of positive electrodes manufactured in Examples 1 and 2 and Comparative Example 2.

### [Detailed Description of the Preferred Embodiments]

Since the present invention can have various changes and can have various embodiments, specific embodiments will be described in detail in the detailed description.

However, this is not intended to limit the present invention to specific embodiments, and it should be understood to include all modifications, equivalents and substitutes included in the spirit and scope of the present invention.

In the present invention, it is to be understood that the terms "include(s)" or "have(has)" and the like are intended to specify the presence of stated features, numbers, steps, operations, components,parts or combinations thereof, but do not preclude the presence or addition of one or more other features or numbers, steps, operations, components, parts and combinations thereof.

Further, in the present invention, when a portion of a layer, film, region, plate, etc. is described as being "on" another portion, it includes not only the case where the other portion is "directly on" but also the case where there is another portion therebetween. Conversely, where a portion of a layer, film, region, plate, etc. is described as being "under" another portion, this includes the case where there is another portion therebetween as well as "directly under" the other portion. Also, what is referred to herein as being disposed "on" may include being disposed not only on top but also on the bottom.

In addition, in the present invention, "main component" refers to 50% by weight or more, 60% by weight or more, 70% by weight or more, 80% by weight or more, 90% by weight or more, 95% by weight or more, or 97.5% by weight or more based on the total weight of the composition or specific component, and in some cases, when constituting the entire composition or a specific component, that is, it may mean 100% by weight.

Also, in the present invention, "Ah" is a capacity unit of a lithium secondary battery, which is referred to as "ampere-hour" and means an amount of current per hour. For example, when the battery capacity is "3000 mAh", it means that it can be discharged for 1 hour with a current of 3000 mA.

Hereinafter, the present invention will be described in more detail.

### Positive electrode for lithium secondary battery

In one embodiment, the present disclosure provides a positive electrode for a lithium secondary battery including:
a positive electrode current collector; and
a positive electrode mixture layer disposed on the positive electrode current collector and including a positive electrode active material, a positive electrode additive represented by the following Chemical Formula 1, a first conductive material, and a binder;
wherein the first conductive material contains one or more of graphene, carbon nanotubes, graphite nanofibers, carbon nanofibers, vapor-grown carbon fibers and activated carbon fibers; and

The sheet resistance of the positive electrode is 3.0 Ω/sq. or less:

[Chemical Formula 1] LiₚCo_{(1-q)}M¹_{q}O₄

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

The positive electrode for a lithium secondary battery according to the present technology includes a positive electrode mixture layer manufactured by coating, drying, and pressing a positive electrode slurry on a positive electrode current collector, and the positive electrode mixture layer has a configuration containing a positive electrode active material, a positive electrode additive, a conductive material, and a binder.

In this case, the positive electrode additive may be a lithium cobalt oxide represented by the following Chemical Formula 1:

[Chemical Formula 1] LiₚCo_{(1-q)}M¹_{q}O₄

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

The positive electrode additive may contain lithium in excess to provide lithium for lithium consumption resulting from irreversible chemical and physical reactions at the negative electrode upon initial charging, thereby increasing the charging capacity of the battery and decreasing the irreversible capacity to improve lifetime characteristics.

Among them, the positive electrode additive represented by Chemical Formula 1 has a higher content of lithium ions compared to nickel-containing oxides commonly used in the art, so that lithium ions lost due to an irreversible reaction during initial activation of the battery can be supplemented, and thus the charging and discharging capacity of the battery can be significantly improved. In addition, there is no side reaction that occurs due to the elution of transition metals during charging and discharging of the battery compared to the iron- and/or manganese-containing oxides commonly used in the art, so there is an advantage of excellent battery stability. The lithium metal oxide represented by Chemical Formula 1 may include Li₆CoO₄, Li₆Co_{0.5}Zn_{0.5}O₄, Li₆Co_{0.7}Zn_{0.3}O₄, etc.

In addition, the positive electrode additive represented by Chemical Formula 1 may have a tetragonal crystal structure, and among them, it may be included in a space group of P4₂/nmc having a twisted tetrahedral structure formed by a cobalt element and an oxygen element. Since the positive electrode additive has a twisted tetrahedral structure formed by cobalt atoms and oxygen atoms and is structurally unstable, when the positive electrode additive is used in an amount of 5 parts by weight or less based on 100 parts by weight of a positive electrode mixture layer in the manufacture of the positive electrode, a side reaction with moisture or oxygen in air may be caused in the course of mixing of the positive electrode slurry. However, the present technology has the advantage of preventing the positive electrode additive from causing side reactions with moisture or oxygen in the air by using a composition in which the positive electrode additive is pre-dispersed when preparing the positive electrode slurry.

In addition, the positive electrode additive may be included in an amount of 0.1 to 10 parts by weight, based on 100 parts by weight of the positive electrode mixture layer, and specifically, may be included in an amount of 0.1 to 8 parts by weight; 0.1 to 5 parts by weight; 1 to 10 parts by weight; 2 to 10 parts by weight; 5 to 10 parts by weight; 2 to 8 parts by weight; 3 to 7 parts by weight; or 4 to 5.5 parts by weight, based on 100 parts by weight of the positive electrode mixture layer. According to the present technology, by adjusting the content of the positive electrode additive within the above range, it is possible to prevent a deterioration of the charging and discharging capacity due to insufficient replenishment of lithium ions lost by the irreversible reaction because of a low content of the positive electrode additive, and it is also possible to avoid the generation of a large amount of oxygen gas during charging and discharging of the battery due to an excessive amount of the positive electrode additive.

In addition, the positive electrode for the lithium secondary battery may include a first conductive material in the positive electrode mixture layer, wherein the first conductive material may contain one or more of graphene having a linear structure, carbon nanotubes, graphite nanofibers, carbon nanofibers, vapor-grown carbon fibers and activated carbon fibers.

In this case, an average size of the first conductive material may be 500 nm or less, specifically, 10 to 500 nm; 10 to 400 nm; 10 to 300 nm; 10-200 nm; 10 to 100 nm; 50 to 500 nm; 100 to 500 nm; 200 to 500 nm; 250 to 500 nm; 300 to 500 nm; 400 to 500 nm; 100 to 300 nm; 200 to 400 nm; or 50 to 250 nm. Here, the average size may mean an average length of the first conductive material.

According to the present technology, by controlling the average size of the first conductive material having a linear structure within the above range, a conductive path can be formed on the surface of the positive electrode additive having low powder electrical conductivity, thereby lowering the resistance of the positive electrode.

In addition, the positive electrode mixture layer may further include, together with the first conductive material, a second conductive material containing one or more of natural graphite, artificial graphite, carbon black, acetylene black, Denka black, ketjen black, Super-P, channel black, furnace black, lamp black, and thermal black.

In this case, an average size of the second conductive material may be 1 to 100 µm, specifically, 1 to 80 µm; 1 to 60 µm; 1 to 50 µm; 1 to 40 µm; 1 to 20 µm; 1 to 10 µm; 1 to 5 µm; 10 to 100 µm; 50 to 100 µm; 10 to 20 µm; 25 to 50 µm; 2 to 4 µm; it may be 1 to 3 µm.

Moreover, when the positive electrode for a lithium secondary battery includes the first conductive material alone or the first conductive material and the second conductive material together with the positive electrode additive represented by Chemical Formula 1, it may exhibit a sheet resistance of 3.0 Ωsq. or less. Specifically, the positive electrode for a lithium secondary battery may exhibit a sheet resistance of 2.8 Ω/sq. or less; 2.6 Ω/sq. or less; 2.4 Ω/sq. or less; 2.2 Ω/sq. or less; 2.0 Ω/sq. or less; 1.0 Ω/sq. to 3.0 S2/sq.; 1.0 Ω/sq. to 2.6 S2/sq.; 1.2 Ω/sq. to 2.6 S2/sq.; 1.5 Ω/sq. to 2.5 S2/sq.; or 1.4 Ω/sq. to 2.3 Ω/sq..

In addition, when the positive electrode for a lithium secondary battery contains the first conductive material and the second conductive material together with the positive electrode additive represented by Chemical Formula 1, the sheet resistance of the electrode may be further reduced as compared with the case where the first conductive material is contained alone or the second conductive material is contained alone. Specifically, the electrode sheet resistance (R12) of the positive electrode containing the first conductive material and the second conductive material in the positive electrode mixture layer may have a ratio of 0.5 to 1.2 (R12/R1) with respect to the electrode sheet resistance (R1) of the positive electrode containing the first conductive material alone in the positive electrode mixture layer, or a ratio (R12/R2) of 0.1 to 0.8 with respect to the electrode sheet resistance (R2) of the positive electrode containing the second conductive material alone in the positive electrode mixture layer.

More specifically, the electrode sheet resistance (R12) of the positive electrode containing the first conductive material and the second conductive material in the positive electrode mixture layer may have a ratio (R12/R1) of 0.5 to 1.1; 0.5 to 1.0; 0.5 to 0.9; 0.6 to 1.1; 0.65 to 1.0; or 0.7 to 0.98 with respect to the electrode sheet resistance (R1) of the positive electrode containing the first conductive material alone in the positive electrode mixture layer.

In addition, the electrode sheet resistance (R12) of the positive electrode containing the first conductive material and the second conductive material in the positive electrode mixture layer may have a ratio (R12/R2) of 0.1 to 0.7; 0.1 to 0.6; 0.1 to 0.5; 0.1 to 0.45; 0.1 to 0.4; 0.2 to 0.8; 0.2 to 0.55; or 0.2 to 0.5 with respect to the electrode sheet resistance (R2) of the positive electrode containing the second conductive material alone in the positive electrode mixture layer.

As an example, the electrode sheet resistance (R12) of the positive electrode containing the first conductive material and the second conductive material in the positive electrode mixture layer may have a ratio of 0.7 to 1.0 with respect to the electrode sheet resistance (R1) of the positive electrode containing the first conductive material alone in the positive electrode mixture layer, or a ratio of 0.2 to 0.6 with respect to the electrode sheet resistance (R2) of the positive electrode containing the second conductive material alone in the positive electrode mixture layer.

The present technology can further improve the electrical performance of the battery by preventing the charging and discharging capacity and capacity retention rate of the lithium secondary battery from decreasing due to a high sheet resistance exceeding 3.0 Ω/sq.; a sheet resistance ratio exceeding 1.2 (R12/R1); and a sheet resistance ratio exceeding 0.8 (R12/R2) by controlling the sheet resistance of the positive electrode for a lithium secondary cell and the sheet resistance ratios (R12/R1 and R12/ R2), depending on the type of conductive material contained in the positive-electrode mixture layer, in the above range.

In addition, the content of the first conductive material may be 0.1 to 10 parts by weight, specifically, 0.1 to 7.5 parts by weight; 0.1 to 5 parts by weight; 0.1 to 3 parts by weight; 0.1 to 1.5 parts by weight; 2 to 5 parts by weight; 4 to 7 parts by weight; 5 to 10 parts by weight; 7 to 9 parts by weight; or 0.1 to 0.9 parts by weight, based on 100 parts by weight of the positive electrode mixture layer.

Furthermore, when the first conductive material and the second conductive material are used together, the total content of the first conductive material and the second conductive material may be 0.1 to 10 parts by weight, specifically 0.1 to 7.5 parts by weight; 0.1 to 5 parts by weight; 0.1 to 3 parts by weight; 0.1 to 1.5 parts by weight; 2 to 5 parts by weight; 4 to 7 parts by weight; 5 to 10 parts by weight; 7 to 9 parts by weight; or 0.1 to 0.9 parts by weight, based on 100 parts by weight of the positive electrode mixture layer.

Here, the second conductive material may be included in an amount of 20 to 60 parts by weight, specifically, 20 to 50 parts by weight; 20 to 45 parts by weight; 30 to 60 parts by weight; 25 to 50 parts by weight; or 30 to 50 parts by weight, based on 100 parts by weight of the first conductive material.

The present technology may not only effectively improve the increase in sheet resistance of the electrode due to the positive electrode additive represented by the Chemical Formula 1, but may also prevent the activity of a positive electrode active material from being lowered due to an excessive amount of conductive material exceeding 10 parts by weight, by controlling the content of the first conductive material and the total content of combined first and second conductive materials within the above ranges.

Meanwhile, the positive electrode active material is a positive electrode active material capable of reversible intercalation and deintercalation, and may include a lithium metal composite oxide represented by the following Chemical Formula 2 as a main component:

[Chemical Formula 2] Liₓ[Ni_{y}Co_{z}Mn_{w}M²ᵥ]Oᵤ

wherein,
M² is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

The lithium metal composite oxide represented by Chemical Formula 2 is a composite metal oxide containing lithium and nickel, and may include one or more compounds selected from the group consisting of LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂ and LiNi_{0.7}Co_{0.1}Mn_{0.1}Al_{0.1}O₂.

In addition, the content of the positive electrode active material may be 85 to 95 parts by weight, specifically, 88 to 95 parts by weight, 90 to 95 parts by weight, 86 to 90 parts by weight, or 92 to 95 parts by weight, based on 100 parts by weight of the positive electrode mixture layer.

In addition, the binder serves to bind the positive electrode active material, the positive electrode additive, and the conductive material to each other, and as long as it has such a function, it may be used without particular limitation. Specifically, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidene fluoride.

In addition, the binder may be included in an amount of 1 to 10 parts by weight, specifically 2 to 8 parts by weight, based on a total of 100 parts by weight of the mixture layer; or 1 to 5 parts by weight of the conductive material may be included.

In addition, an average thickness of the mixture layer is not particularly limited, and specifically may be 50 µm to 300 µm, more specifically 100 µm to 200 µm; 80 µm to 150 µm; 120 µm to 170 µm; 150 µm to 300 µm; 200 µm to 300 µm; or 150 µm to 190 µm.

In addition, in the positive electrode, as the positive electrode current collector, one having high conductivity without causing a chemical change in the battery may be used. For example, stainless steel, aluminum, nickel, titanium, calcined carbon, etc. may be used, and in the case of aluminum or stainless steel, one whose surface is treated with carbon, nickel, titanium, silver, or the like may be used. In addition, fine irregularities may be formed on the surface of the positive electrode current collector to increase the adhesion of the positive electrode active material, and various forms such as a film, a sheet, a foil, a net, a porous body, a foam, and a nonwoven body are possible. In addition, the average thickness of the current collector may be appropriately applied in a range of 3 to 500 µm in consideration of the conductivity and total thickness of the positive electrode to be manufactured.

### Method of manufacturing positive electrode for lithium secondary battery

Further, in one embodiment, the present disclosure provides a method of manufacturing a positive electrode for a lithium secondary battery, including steps of:
preparing a pre-dispersion by mixing a positive electrode additive represented by the following Chemical Formula 1, a first conductive material, and a binder;
preparing a positive electrode slurry by mixing the prepared pre-dispersion, a positive electrode active material, and a binder; and
preparing a positive electrode mixture layer by applying the positive electrode slurry on a positive electrode current collector;
wherein the first conductive material contains one or more of graphene, carbon nanotubes, graphite nanofibers, carbon nanofibers, vapor-grown carbon fibers and activated carbon fibers; and
the manufactured positive electrode has a sheet resistance of 3.0 Ω/sq. or less:

   [Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

In the method of manufacturing a positive electrode for a lithium secondary battery according to the present technology, a positive electrode additive represented by Chemical Formula 1, a first conductive material, and a binder are first mixed to prepare a pre-dispersion, and the prepared pre-dispersion is further mixed with a positive electrode active material and a binder to prepare a slurry, and then the positive electrode slurry is applied on a positive electrode current collector and dried to prepare a positive electrode mixture layer.

Here, the step of preparing the pre-dispersion is a step of mixing the positive electrode additive, the conductive material and the binder, and may be carried out in a conventional manner used in the preparation of a slurry in the art. For example, the step of preparing the pre-dispersion may be carried out by adding each component to a homomixer, stirring at 1,000 to 5,000 rpm for 30 to 600 minutes, and viscosity can be controlled while adding a solvent during the stirring. As an example, for the positive electrode pre-dispersion according to the present technology, a positive electrode additive represented by Chemical Formula 1, a conductive material and a binder are introduced into a homomixer, and an N-methylpyrrolidone solvent is injected while mixing at 3,000 rpm for 60 minutes to be prepared in a form in which the viscosity at 25±1 °C is adjusted to 7,500±300 cps.

In addition, the step of preparing the pre-dispersion may be carried out under temperature and/or humidity conditions satisfying a specific range in order to prevent the structurally unstable positive electrode additive from being decomposed and/or damaged.

Specifically, the step of preparing the pre-dispersion may be carried out under a temperature condition of 40 °C or less, and more specifically, 10 °C to 40 °C; 10 °C to 35 °C; 10 °C to 30 °C; 10 °C to 25 °C; 10 °C to 20 °C; 15 °C to 40 °C; 20 °C to 40 °C; 15 °C to 35 °C; or 18 °C to 30 °C.

In addition, the step of preparing the pre-dispersion may be carried out under a relative humidity (RH) condition of 10% or less, and more specifically, 9% or less, 8% or less, 7% or less, 6% or less, 5% or less, 4% or less, 3% or less, 2% or less, or 1% or less.

In the present technology, by controlling the temperature and/or humidity conditions as described above during the preparation of the pre-dispersion, the positive electrode additive in particulate form causes a side reaction with moisture and/or oxygen in the air in the process of mixing with a conductive material, etc., thereby the degradation of irreversible activity can be prevented, and a low sheet resistance of the positive electrode mixture layer can be realized.

Furthermore, the step of preparing of the positive electrode slurry may be carried out by further mixing the second conductive material when the positive electrode active material and the binder are further mixed with the prepared pre-dispersion. The second conductive material may be mixed together with the first conductive material when the pre-dispersion is prepared, but the present technology enables the positive electrode additive contained in the pre-dispersion and the first conductive material to be uniformly dispersed through the way in which the second conductive material is further mixed with the prepared pre-dispersion, and at the same time enables the first conductive material to form an electrical network more effectively on the surface of the positive electrode additive.

### Lithium secondary battery

In addition, the present disclosure, in one embodiment, provides a lithium secondary battery including the positive electrode according to the present technology described above; a negative electrode; and a separator positioned between the positive electrode and the negative electrode.

The lithium secondary battery according to the present technology may exhibit excellent charging and discharging performance as well as a small amount of oxygen gas generated during charging and discharging by having the positive electrode of the present technology described above.

The lithium secondary battery of the present technology has a structure including a positive electrode, a negative electrode, and a separator interposed between the positive electrode and the negative electrode.

Here, the negative electrode is prepared by coating, drying and pressing the negative electrode active material on the negative electrode current collector, and if necessary, a conductive material as in the positive electrode, an organic binder polymer, an additive, etc. as described above may be optionally further included.

In addition, the negative electrode active material may include, for example, a carbon material and a silicon material. The carbon material refers to a carbon material containing carbon atoms as a main component, and examples of the carbon material may include graphite having a completely layered crystal structure like natural graphite, soft carbon having a low-crystalline layered crystal structure (graphene structure; hexagonal honeycomb-shaped planes of carbon) and hard carbon in which these structures are mixed with amorphous parts, artificial graphite, expanded graphite, carbon fibers, non-graphitizable carbon, carbon black, acetylene black, ketjen black, carbon nanotubes, fullerenes, activated carbon, graphene, etc., and preferably one or more selected from the group consisting of natural graphite, artificial graphite, graphene, and carbon nanotubes. More preferably, the carbon material may include natural graphite and/or artificial graphite, and may include any one or more of graphene and carbon nanotubes together with the natural graphite and/or artificial graphite. In this case, the carbon material may include 0.1 to 10 parts by weight of graphene and/or carbon nanotubes, based on 100 parts by weight of the total carbon material, and more specifically, 0.1 to 5 parts by weight, or 0.1 to 2 parts by weight of graphene and/or carbon nanotubes, based on 100 parts by weight of the total carbon material.

In addition, the silicon material is a particle including silicon (Si) as a main component as a metal component, and may include one or more of silicon (Si) particles and silicon oxide (SiOx, 1≤X≤2) particles. As an example, the silicon material may include silicon (Si) particles, silicon monoxide (SiO) particles, silicon dioxide (SiO₂) particles, or a mixture thereof.

In addition, the silicon material may have a form in which crystalline particles and amorphous particles are mixed, and the proportion of the amorphous particles is 50 to 100 parts by weight, specifically 50 to 90 parts by weight; 60 to 80 parts by weight or 85 to 100 parts by weight, based on 100 parts by weight of the total silicon material. In the present technology, by controlling the proportion of the amorphous particles included in the silicon material to the above range, thermal stability and flexibility can be improved in a range that does not reduce the electrical properties of the electrode.

In addition, the negative electrode active material includes a carbon material and a silicon material, and may be included in an amount of 1 to 20 parts by weight, based on 100 parts by weight of the negative electrode mixture layer, specifically, may be included in an amount of 5 to 20 parts by weight; 3 to 10 parts by weight; 8 to 15 parts by weight; 13 to 18 parts by weight; or 2 to 7 parts by weight, based on 100 parts by weight of the negative electrode mixture layer.

According to the present technology, by controlling the content of the carbon material and the silicon material included in the negative active material to the above ranges, it is possible to improve the charge capacity per unit mass while reducing lithium consumption and irreversible capacity loss during initial charging and discharging of the battery.

As an example, the negative electrode active material may include: 95±2 parts by weight of graphite based on 100 parts by weight of the negative electrode mixture layer; and 5±2 parts by weight of a mixture in which silicon monoxide (SiO) particles and silicon dioxide (SiO₂) particles are uniformly mixed. According to the present technology, by controlling the content of the carbon material and the silicon material included in the negative active material to the above ranges, it is possible to improve the charge capacity per unit mass while reducing lithium consumption and irreversible capacity loss during initial charging and discharging of the battery.

In addition, the negative electrode mixture layer may have an average thickness of 100 µm to 200 µm, specifically, 100 µm to 180 µm, 100 µm to 150 µm, 120 µm to 200 µm, 140 µm to 200 µm, or 140 µm to 160 µm.

In addition, the negative electrode current collector is not particularly limited as long as it has high conductivity without causing a chemical change in the battery, and for example, copper, stainless steel, nickel, titanium, calcined carbon, etc. may be used, and in the case of copper or stainless steel, one whose surface is treated with carbon, nickel, titanium, silver, etc. may be used. In addition, the negative electrode current collector, like the positive electrode current collector, may have fine irregularities formed on the surface thereof to strengthen the bonding force with the negative electrode active material, and may take various forms such as films, sheets, foils, nets, porous materials, foams, non-woven materials, etc. In addition, the average thickness of the negative electrode current collector may be appropriately applied in a range of 3 to 500 µm in consideration of the conductivity and total thickness of the negative electrode to be manufactured.

In addition, the separator is interposed between the negative electrode and the positive electrode, and an insulating thin film having high ion permeability and mechanical strength is used. Although the separator is not particularly limited as long as it is conventionally used in the art, specifically, a sheet or nonwoven fabric made of chemical-resistant and hydrophobic polypropylene; glass fiber; polyethylene or the like may be used, and in some cases, a composite separator in which a porous polymer substrate such as a sheet or nonwoven fabric is coated with inorganic particles/organic particles by an organic binder polymer may be used. When a solid electrolyte such as a polymer is used as the electrolyte, the solid electrolyte may also serve as a separator. In addition, the separator may have an average pore diameter of 0.01 to 10 µm, and an average thickness of 5 to 300 µm.

Meanwhile, the positive electrode and the negative electrode may be wound in the form of a jelly roll and accommodated in a cylindrical battery, a prismatic battery, or a pouch-type battery, or may be accommodated in a pouch-type battery in a folding or stack-and-folding form, but is not limited thereto.

In addition, a lithium salt-containing electrolyte according to the present technology may consist of an electrolyte and a lithium salt, and as the electrolyte, a non-aqueous organic solvent, an organic solid electrolyte, an inorganic solid electrolyte, and the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate or ethyl propionate may be used.

As the organic solid electrolyte, for example, polyethylene derivatives, polyethylene oxide derivatives, polypropylene oxide derivatives, phosphoric acid ester polymers, poly alginate lysine, polyester sulfide, polyvinyl alcohol, polyvinylidene fluoride, a polymeric material including an ionic dissociating group and the like may be used.

As the inorganic solid electrolyte, nitrides, halides, sulfates, and the like of Li, such as Li₃N, Lil, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂ may be used.

The lithium salt is a material that is easily soluble in the non-aqueous electrolyte, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium 4-phenylboronate, lithium imide and the like may be used.

In addition, for the purpose of improving charging/discharging characteristics, flame retardancy, etc., for example, pyridine, triethylphosphite, triethanolamine, cyclic ether, ethylene diamine, n-glyme, hexamethyl phophoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride and the like may be added to the electrolyte. In some cases, in order to impart incombustibility, a halogen-containing solvent such as carbon tetrachloride and ethylene trifluoride may be further included, and carbon dioxide gas may be further included to improve high temperature storage characteristics, and fluoro-ethylene carbonate (FEC), propene sultone (PRS), etc. may be further included.

Hereinafter, the present disclosure will be described in detail by way of Examples.

However, the following Examples and Experimental Examples are merely illustrative of the present technology, and the content of the present technology is not limited to the following Examples and Experimental Examples.

### Examples 1 to 6 and Comparative Examples 1 to 2: Manufacture of positive electrode for lithium secondary battery

N-methylpyrrolidone was injected into a homomixer, and 5 parts by weight of Li₆Co_{0.7}Zn_{0.3}O₄ as a positive electrode additive based on 100 parts by weight of the solid content of the positive electrode slurry; and 1 part by weight of PVdF as a binder were weighed and added, and carbon nanotubes (average size: 60±10 nm) were added as a first conductive material, and then primarily mixed at 2,000 rpm for 30 minutes to prepare a pre-dispersion for positive electrode manufacture. At this time, the content of the first conductive material used in the preparation of the pre-dispersion and the conditions of temperature and relative humidity (RH) are shown in Table 1 below.

Then, LiNi_{0.6}Co_{0.2}Mn_{0.2}O₂ as a positive electrode active material; Denka black as a second conductive material (average size: 2±0.5 µm); and PVdF as a binder were weighed and added to the homomixer containing the prepared pre-dispersion, and secondary mixing was carried out at 2,500 rpm for 30 minutes to prepare a positive electrode slurry for a lithium secondary battery. At this time, the content of PVdF was 1 part by weight based on 100 parts by weight of the solid content of the positive electrode slurry, and the contents of the positive electrode active material and the second conductive material were adjusted as shown in Table 1 below.

The prepared positive electrode slurry was applied to one side of an aluminum current collector, dried at 100° C, and rolled to manufacture a positive electrode. At this time, the total thickness of the positive electrode mixture layer was 130 µm, and the total thickness of the manufactured positive electrode was about 200 µm.

**[Table 1]**

| Positive electrode slurry Based on 100 parts by weight | Conductive material content | | Positive electrode active material | temperatu re [°C] | humidity [%] |
|---|---|---|---|---|---|
| | First conductive material | Second conductive material | | | |
| Example 1 | 0.5 parts by weight | 0.2 parts by weight | 92.3 parts by weight | 20 to 25 | 3% |
| Example 2 | 0.7 parts by weight | - | 92.3 parts by weight | 20 to 25 | 3% |
| Example 3 | 0.7 parts by weight | 0.1 parts by weight | 92.2 parts by weight | 20 to 25 | 3% |
| Example 4 | 0.7 parts by weight | 5 parts by weight | 87.3 parts by weight | 20 to 25 | 3% |
| Example 5 | 0.5 parts by weight | 0.2 parts by weight | 92.3 parts by weight | 50 to 55 | 3% |
| Example 6 | 0.5 parts by weight | 0.2 parts by weight | 92.3 parts by weight | 20 to 25 | 50% |
| Comparative Example 1 | - | - | 93.0 parts by weight | 20 to 25 | 3% |
| Comparative Example 2 | - | 2 parts by weight | 91.0 parts by weight | 20 to 25 | 3% |

### Comparative Example 3: Manufacture of positive electrode for lithium secondary battery

N-methylpyrrolidone was injected into a homomixer, and 92.3 parts by weight of LiNi_{0.6}Co_{0.2}Mn_{0.2}O₂ as a positive electrode active material; 5 parts by weight of Li₆Co_{0.7}Zn_{0.3}O₄ as a positive electrode additive; 0.7 parts by weight of carbon nanotubes (average size: 60±10 nm) as a first conductive material; 0.2 parts by weight of Denka black as a second conductive material (average size: 2±0.5 µm); and 2 parts by weight of PVdF as a binder were weighed based on 100 parts by weight of the solid content of the positive electrode slurry, and added and mixed at 2,000 rpm for 60 minutes to prepare a positive electrode slurry for a lithium secondary battery. At this time, temperature and relative humidity (RH) were adjusted to 20 to 25 °C and 3%, respectively.

The prepared positive electrode slurry was applied to one side of an aluminum current collector, dried at 100° C, and rolled to manufacture a positive electrode. At this time, the total thickness of the positive electrode mixture layer was 130 µm, and the total thickness of the manufactured positive electrode was about 200 µm.

### Comparative Example 4: Manufacture of positive electrode for lithium secondary battery

A positive electrode was prepared in the same manner as in Example 1, except that Denka black (average size: 2±0.5 µm) was used instead of carbon nanotubes (average size: 60±10 nm) as the first conductive material in the preparation of the pre-dispersion, and carbon nanotubes (average size: 60±10 nm) were used instead of Denka black (average size: 2±0.5 µm) as the second conductive material in the preparation of the positive electrode slurry.

### Examples 7 to 12 and Comparative Examples 5 to 8: Manufacture of lithium secondary battery

Natural graphite and silicon (SiOx, 1≤x≤2) particles as a negative electrode active material; and styrene butadiene rubber (SBR) as a binder were prepared, and a negative electrode slurry was prepared in the same manner as the positive electrode slurry. At this time, the graphite used in the preparation of the negative electrode mixture layer was natural graphite (average particle size: 0.01 to 0.5 µm), and silicon (SiOx) particles having an average particle size of 0.9 to 1.1 µm were used. The prepared negative electrode slurry was applied to one side of a copper current collector, dried at 100 °C, and rolled to manufacture a negative electrode. At this time, the total thickness of the negative electrode mixture layer was 150 µm, and the total thickness of the manufactured negative electrode was about 250 µm.

A separator (thickness: about 16 µm) made of a porous polyethylene (PE) film was stacked so as to be interposed between the negative electrode and the positive electrode manufactured in Examples 1 to 6 and Comparative Examples 1 to 4, and E2DVC was injected as an electrolyte to manufacture a cell in the form of a full cell.

Here, "E2DVC" is a kind of carbonate-based electrolyte, and means a solution obtained by mixing lithium hexafluorophosphate (LiPF₆, 1.0M) and vinyl carbonate (VC, 2% by weight) in a mixture of ethylene carbonate (EC):dimethyl carbonate (DMC):diethyl carbonate (DEC)=1:1:1 (volume ratio).

**[Table 2]**

| Positive electrode for lithium secondary battery | Lithium secondary battery |
|---|---|
| Example 1 | Example 7 |
| Example 2 | Example 8 |
| Example 3 | Example 9 |
| Example 4 | Example 10 |
| Example 5 | Example 11 |
| Example 6 | Example 12 |
| Comparative Example 1 | Comparative Example 5 |
| Comparative Example 2 | Comparative Example 6 |
| Comparative Example 3 | Comparative Example 7 |
| Comparative Example 4 | Comparative Example 8 |

### Experimental Examples.

In order to evaluate the performance of the positive electrode for a lithium secondary battery according to the present technology, the following experiment was performed.

### A) Electrode sheet resistance evaluation

For the positive electrodes manufactured in Examples 1 to 6 and Comparative Examples 1 to 4, the sheet resistance of the electrodes was measured by a 4-point probe method, and the results are shown in Table 3 and FIG. 1 below.

### B) Evaluation of oxygen gas amount degassed during charging and discharging

For the lithium secondary batteries manufactured in Examples 7 to 12 and Comparative Examples 5 to 8, initial charging (formation) was proceeded at 55 °C under the conditions of 3.5 V and 1.0 C, and the gas generated at the positive electrode was degassed while performing the initial charging to analyze the content of oxygen gas generated during the initial charging. Then, charging and discharging were repeatedly carried out 50 times at 45 °C under 0.3 C conditions to further analyze the oxygen gas content during each charging/discharging, and the analyzed results are shown in Table 3 below.

### C) Evaluation of charging and discharging capacity and retention rate

For the lithium secondary batteries manufactured in Examples 7 to 12 and Comparative Examples 5 to 8, charging was performed at a temperature of 25 °C with a charging current of 0.1 C to a charging cut-off voltage of 4.2 to 4.25 V, and charging was performed until the current density at the cut-off voltage was 0.01 C for activation. Then, it was discharged to a cut-off voltage of 2 V with a discharge current of 0.1 C, and the initial charging/discharging capacity per unit mass was measured.

Then, the charging and discharging capacity was measured while repeatedly performing charging and discharging 50 times at 45 °C under 0.3 C conditions, and the charging/discharging capacity retention rate was calculated after performing charging and discharging 50 times. The results are shown in Table 3 below.

**[Table 3]**

| | Electrode sheet resistance | | | Oxygen gas generation [ml/g] | | Initial charging/d ischarging capacity [Ah] | Capac ity Retent ion rate |
|---|---|---|---|---|---|---|---|
| | Measured value [Ω/sq.] | R12/R 1 | R12/R 2 | 1 charging/ discharging | 50 charging/ discharging | | |
| Example 7 | 2.0±0.2 | 0.89 | 0.36 | 86 | 12 | 103.2 | 92.5% |
| Example 8 | 2.25±0.02 | - | - | 91 | 19 | 102.8 | 91.9% |
| Example 9 | 2.3±0.05 | 1.02 | 0.42 | 96 | 18 | 102.3 | 91.2% |
| Example 10 | 1.9±0.05 | 0.84 | 0.35 | 95 | 26 | 102.8 | 90.9% |
| Example 11 | 2.1±0.05 | 0.93 | 0.38 | 101 | 68 | 98.0 | 86.1% |
| Example 12 | 2.1±0.05 | 0.93 | 0.38 | 107 | 78 | 98.2 | 85.7% |
| Compara tive Example 5 | 21.3±0.5 | - | - | 89 | 13 | 94.7 | 85.6% |
| Compara tive Example 6 | 5.5±0.5 | - | - | 97 | 15 | 101.8 | 89.9% |
| Compara tive Example 7 | 2.9±0.1 | 1.24 | 0.53 | 111 | 75 | 100.4 | 89.2% |
| Compara tive Example 8 | 2.8±0.1 | 1.24 | 0.51 | 95 | 21 | 100.1 | 89.6% |

Referring to Table 3 and FIG. 1, the positive electrodes for a lithium secondary battery of Examples manufactured according to the present technology were found to have a low sheet resistance of 2.5 Ω/sq. or less despite containing the positive electrode additive represented by the Chemical Formula 1 having a low electrical conductivity by containing a first conductive material having a linear structure, and it was found that it exhibits a lower sheet resistance as compared to the case of containing the first conductive material or the second conductive material having no linear structure alone. In addition, the lithium secondary battery of the embodiment including the same has not only a high initial charging/discharging capacity of 102 Ah or more, but also exhibits a high capacity retention rate of 91% or more. Moreover, it was confirmed that the lithium secondary battery has high safety because the amount of oxygen gas generated after initial charging and discharging is significantly reduced.

From these results, the positive electrode for a lithium secondary battery according to the present technology is manufactured by using a pre-dispersion containing a positive electrode additive represented by Chemical Formula 1 and a conductive material having a linear structure in a positive electrode mixture layer as an irreversible additive and, by adjusting the electrode sheet resistance to satisfy a specific range, it is possible to reduce the amount of oxygen gas generated during charging and discharging, as well as easily improve the charging and discharging efficiency of the lithium secondary battery.

While the foregoing has been described with reference to preferred embodiments of the present invention, it should be understood by those skilled in the art or by those of ordinary skill in the art that various changes and modifications can be made therein without departing from the spirit and scope of the invention as set forth in the claims that follow.

Accordingly, the technical scope of the present invention should not be limited to the content described in the detailed description of the specification, but should be defined by the claims.

## Claims

1. A positive electrode for a lithium secondary battery, comprising:
a positive electrode current collector; and
a positive electrode mixture layer disposed on the positive electrode current collector and including a positive electrode active material, a positive electrode additive represented by the following Chemical Formula 1, a first conductive material, and a binder;
wherein the first conductive material contains one or more of carbon nanotubes, graphite nanofibers, carbon nanofibers, vapor-grown carbon fibers and activated carbon fibers; and
the sheet resistance of the positive electrode is 3.0 Ω/sq. or less:
[Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

2. The positive electrode of claim 1, wherein:
the positive electrode mixture layer further includes a second conductive material, and
the second conductive material contains one or more of natural graphite, artificial graphite, carbon black, acetylene black, Denka black, ketjen black, Super-P, channel black, furnace black, lamp black and thermal black.

3. The positive electrode of claim 2, wherein
the electrode sheet resistance R12 of the positive electrode containing the first conductive material and the second conductive material in the positive electrode mixture layer has:
a ratio of R12/R1 of 0.5 to 1.2 with respect to the electrode sheet resistance R1 of the positive electrode containing the first conductive material alone in the positive electrode mixture layer, or
a ratio of R12/R2 of 0.1 to 0.8 with respect to the electrode sheet resistance R2 of the positive electrode containing the second conductive material alone in the positive electrode mixture layer

4. The positive electrode of claim 2, wherein
the electrode sheet resistance R12 of the positive electrode containing the first conductive material and the second conductive material in the positive electrode mixture layer has:
a ratio of R12/R1 of 0.7 to 1.0 with respect to the electrode sheet resistance R1 of the positive electrode containing the first conductive material alone in the positive electrode mixture layer, or
a ratio of R12/R2 of 0.2 to 0.6 with respect to an electrode sheet resistance R2 of the positive electrode containing the second conductive material alone in the positive electrode mixture layer.

5. The positive electrode of claim 1, wherein the positive electrode additive has a tetragonal structure with a space group of P4₂/nmc.

6. The positive electrode of claim 1, wherein the content of the positive electrode additive is 0.1 to 10 parts by weight based on 100 parts by weight of the positive electrode mixture layer.

7. The positive electrode of claim 1, wherein the content of the first conductive material is 0.1 to 10 parts by weight based on 100 parts by weight of the positive electrode mixture layer.

8. The positive electrode of claim 2, wherein the total content of the first conductive material and the second conductive material is 0.1 to 10 parts by weight based on 100 parts by weight of the positive electrode mixture layer.

9. The positive electrode of claim 2, wherein the second conductive material is included in an amount of 20 to 60 parts by weight based on 100 parts by weight of the first conductive material.

10. The positive electrode of claim 1, wherein the positive electrode active material is a lithium metal composite oxide represented by the following Chemical Formula 2:
[Chemical Formula 2] Liₓ[Ni_{y}Co_{z}Mn_{w}M²ᵥ]Oᵤ
wherein,
M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

11. A method of manufacturing a positive electrode for a lithium secondary battery, comprising steps of:
preparing a pre-dispersion by mixing a positive electrode additive represented by the following Chemical Formula 1, a first conductive material, and a binder;
preparing a positive electrode slurry by mixing the prepared pre-dispersion, a positive electrode active material, and a binder; and
preparing a positive electrode mixture layer by applying the positive electrode slurry on a positive electrode current collector;
wherein the first conductive material contains one or more of carbon nanotubes, graphite nanofibers, carbon nanofibers, vapor-grown carbon fibers and activated carbon fibers; and
the manufactured positive electrode has a sheet resistance of 3.0 Ω/sq. or less:
[Chemical Formula 1] LiₚCo_{(1-q)}M¹_{q}O₄
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

12. The method of claim 11, wherein the step of preparing the pre-dispersion is carried out at a relative humidity condition of 10% or less.

13. The method of claim 11, wherein in the step of preparing the positive electrode slurry, a second conductive material is further mixed.

14. A lithium secondary battery including a positive electrode according to claim 1; a negative electrode; and a separator positioned between the positive electrode and the negative electrode.
